# EUROPÄISCHE PATENTANMELDUNG

(11) **EP 1 892 425 A2**
(43) Veröffentlichungstag der Anmeldung: **27.02.2008**
(21) Anmeldenummer: 07113578.4
(22) Anmeldetag: 01.08.2007
(51) Int. Cl.: F16B 25/10, F16B 13/14

(54) **Befestigungselement für harte Untergründe**

(30) Priorität: 23.08.2006 DE 102006000412
(71) Anmelder: HILTI Aktiengesellschaft, 9494 Schaan (LI)
(72) Erfinder: Ayrle, Thomas, 86853 Langerringen (DE); Schäffer, Marc, 88183 Sigmarszell-Niederstaufen (DE)
(74) Vertreter: Wildi, Roland

(57) **Zusammenfassung**

Ein Befestigungselement (11) für harte Untergründe (6) weist einen zylindrischen Grundkörper (12), der sich entlang einer Längsachse (19) erstreckt und eine Mantelfläche (18) aufweist, und ein zumindest bereichsweise an dem Grundkörper (12) angeordnetes, selbstfurchendes Gewinde (13) auf, dessen Höhe sich von der Mantelfläche (18) radial nach aussen erstreckt. Das Befestigungselement (11) ist zusätzlich mittels einer aushärtbaren Masse (8) in dem Untergrund (6) verankerbar. An dem Grundkörper (12) ist eine Nut (16) vorgesehen, deren Tiefe sich von der Mantelfläche (18) radial nach innen erstreckt und die axial beabstandet zu dem Gewinde (13) angeordnet ist.

## Beschreibung

Die Erfindung betrifft ein Befestigungselement für harte Untergründe, das einen Grundkörper, der sich entlang einer Längsachse erstreckt und eine Mantelfläche aufweist, ein zumindest bereichsweise an dem Grundkörper angeordnetes, selbstfurchendes Gewinde, dessen Höhe sich von der Mantelfläche des Grundkörpers radial nach aussen erstreckt, sowie zumindest eine Nut an dem Grundkörper aufweist, deren Tiefe sich von der Mantelfläche des Grundkörpers radial nach innen erstreckt.

Es sind verschiedene Arten von Befestigungselementen für harte Untergründe, wie Beton, Mauerwerk und dergleichen bekannt, welche in ein zuvor erstelltes Bohrloch in dem Untergrund gesetzt werden. Derartige Befestigungselemente werden je nach Ausgestaltung drehend und/oder schlagend gesetzt.

Aus der EP 0 623 759 B1 ist eine gewindeformende Schraube zum Einschrauben in harte Untergründe bekannt, die einen Schaft als Grundkörper und einen Schraubenkopf als Angriffsmittel für ein Setzwerkzeug an einem Ende des Schafts aufweist. Entlang des Schafts erstreckt sich bereichsweise ein selbstfurchendes Gewinde, dessen Höhe sich von der Mantelfläche des Schafts radial nach aussen erstreckt. Zur Erleichterung des Eindrehens der Schraube sind beidseits des Gewindes umlaufend Vertiefungen zur Aufnahme des ausgebrochenen Untergrundmaterials an dem Grundkörper vorgesehen, deren Tiefe sich von der Mantelfläche des Grundkörpers radial nach innen erstrecken.

Aus der EP 1 536 149 A2 ist eine Innengewindehülse mit einem selbstfurchenden Gewinde bekannt. Die Innengewindehülse weist einen Grundkörper mit einer Mantelfläche auf. An dem Grundkörper ist bereichsweise ein selbstfurchendes Gewinde vorgesehen, dessen Höhe sich von der Mantelfläche des Grundkörpers radial nach aussen erstreckt. Weiter weist die Innengewindehülse ein innenliegendes Angriffsmittel und eine mit einem Innengewinde als Lastangriffsmittel versehene, von einem Ende des Grundkörpers zugängliche Aufnahme für eine Gewindestange oder Schraube auf.

Aus der US 4,350,464 A ist eine schlagend setzbare Ankerstange bekannt, die an einem Schaft als Grundkörper ein selbstfurchendes Gewinde, dessen Höhe sich von der Mantelfläche des Schafts radial nach aussen erstreckt, sowie daran anschliessend ein Maschinengewinde für die Festlegung eines Gegenstandes, z. B. mittels einer Mutter, an dem Untergrund aufweist.

Über die Einbindelänge des selbstfurchenden Gewindes im Untergrund wird die auf das jeweilige Befestigungselement aufgebrachte Last in den Untergrund eingebracht. Eine Laststeigerung kann dadurch erreicht werden, dass der Ringspalt zwischen der Mantelfläche des Grundkörpers und der Bohrlochwandung möglichst klein gehalten wird, wodurch das beim Setzen des Befestigungselement anfallende Bohrmehl zwischen der Mantelfläche des Grundkörpers und der Bohrlochwandung verpresst wird.

Nachteilig an den bekannten Lösungen ist, dass aufgrund der Eigenschaften des Untergrundes und der Art und des Zustandes des Werkzeuges zum Erstellen des Bohrloches die Grösse des Ringspaltes zwischen der Mantelfläche des Grundkörpers und der Bohrlochwandung von Befestigungspunkt zu Befestigungspunkt stark variieren kann. Zudem können hohe Belastungen auf die von dem Gewinde erzeugten Hinterschnitte im Untergrund wirken, welche zu einem teilweisen oder - im extremsten Fall - zu einem vollständigen Versagen des erstellten Befestigungspunktes führen. Um dies zu vermeiden und eine hohe Tragfähigkeit zu erreichen, weisen derartige Befestigungselemente eine relativ grosse Einbindelänge des Gewindes im Untergrund auf, was jedoch einen hohen Aufwand zum Setzen des entsprechenden Befestigungselementes bedingt.

Aus der DE 198 20 671 A1 ist eine Schraube mit einem selbstschneidenden Gewinde bekannt, die zur Reduktion der erforderlichen Einbindelänge des Gewindes, bei weitgehend vollständiger Ausnützung der Tragfähigkeit, in ein zuvor mit einer aushärtbaren Masse befülltes Bohrloch gesetzt wird. Das Gewinde dieses Befestigungselementes ist nach dem Aushärten der aushärtbaren Masse in dem Untergrund und in der Masse verankert.

Geeignete aushärtbare Massen, wie z. B. Zweikomponentenmörtel auf Epoxybasis, die dem Fachmann beispielsweise auch als Universalmörtel bekannt sind, weisen vorteilhaft einen hohen Füllstoffanteil auf, was eine hohe Viskosität und geringes Schrumpfverhalten bei einer ausreichenden inneren Festigkeit der ausgehärteten Masse gewährleistet. Diese aushärtbaren Massen sind verhältnismässig teuer, so dass aus wirtschaftlichen Überlegungen ein Bedürfnis besteht, die benötigte Menge an aushärtbarer Masse pro Befestigungspunkt auf ein Minimum zu begrenzen.

Nachteilig an der Lösung gemäss der DE 198 20 671 A1 ist, dass der Ringspalt zwischen der Mantelfläche des Grundkörpers und der Bohrlochwandung eine ausreichende Grösse aufweisen muss, so dass neben dünnflüssigen Massen auch aushärtbare Massen mit Füllstoffen verwendbar sind. Zur vollständigen Verfüllung dieses Ringspaltes ist somit eine grosse Menge der aushärtbaren Masse erforderlich. Wird zudem eine Schraube gemäss der DE 198 20 671 A1 in einem Bohrloch ohne aushärtbare Masse gesetzt, ist die erreichbare Ausnützung der Tragfähigkeit nur ein Bruchteil einer herkömmlichen Betonschraube.

Wird ein herkömmliches gattungsgemässes Befestigungselement in ein zuvor mit einer aushärtbaren Masse befülltes Bohrloch gesetzt, ist der Ringspalt zwischen der Mantelfläche des Grundkörpers und der Bohrlochwandung für die meisten Arten von aushärtbaren Massen zu klein. Somit können lediglich dünnflüssige, aushärtbare Massen verwendet werden, die verhältnismässig teuer sind und im Vergleich zu aushärtbaren Massen mit Füllstoffen eine geringere Festigkeit aufweisen. Zudem muss das Bohrloch vor dem Einbringen der aushärtbaren Masse vollständig von dem anfallenden Bohrmehl gereinigt werden, um ein Verstopfen des Ringspaltes durch das Bohrmehl zu verhindern.

Aufgabe der Erfindung ist es, ein in ein Bohrloch drehend und/oder schlagend setzbares Befestigungselement zu schaffen, dass ein vorteilhaftes Tragverhalten aufweist sowie für die Verwendung mit einem Universalmörtel geeignet ist.

Die Aufgabe ist durch die Merkmale des unabhängigen Anspruchs gelöst. Vorteilhafte Weiterbildungen sind in den Unteransprüchen dargelegt.

Gemäss der Erfindung ist die zumindest eine Nut an dem Grundkörper axial beabstandet zu dem Gewinde angeordnet.

Mit dem erfindungsgemässen Befestigungselement kann der Ringspalt zwischen der Mantelfläche des vorteilhaft zylindrischen Grundkörpers und der Bohrlochwandung zur Ausnutzung der Tragfähigkeitssteigerung durch das verpresste Bohrmehl klein gehalten und gleichzeitig mittels einer Verfüllung des Bohrlochs mit einer aushärtbaren Masse die Verankerung des Befestigungselementes derart verbessert werden, dass die Einbindelänge des Gewindes im Untergrund klein gehalten werden kann. Unter der Mantelfläche des Grundkörpers wird die den Grundkörper umgebende Fläche verstanden. Bei einem zylindrischen Grundkörper stellt die Zylindermantelfläche die Mantelfläche des Grundkörpers dar. Das selbstfurchende Gewinde endet beziehungsweise beginnt an dieser Fläche, so dass der Gewindegrund im Wesentlichen auf der Mantelfläche des Grundkörpers liegt.

Die zumindest eine Nut bildet eine Steignut für die aushärtbare Masse aus und schafft einen ausreichenden Raum für aushärtbare Massen, die wie z. B. Zweikomponentenmörtel Füllstoffe von einer bestimmten Partikelgrösse aufweisen. Dadurch kann je nach Anforderungen an den Befestigungspunkt die geeignete aushärtbare Masse zum Verfüllen des Ringspaltes zwischen der Mantelfläche des Grundkörpers und der Bohrlochwandung beziehungsweise des Bohrlochs verwendet werden. Infolge der axial beabstandeten Anordnung der zumindest einen Nut zum Gewinde gelangt nur ein geringer Anteil des beim Furchen der Bohrlochwandung anfallenden Bohrmehls beziehungsweise Bohrkleins in die zumindest eine Nut, wodurch ein Aufsteigen des verdrängten Anteils der aushärtbaren Masse in der zumindest einen Nut nur unwesentlich behindert wird. An dem Grundkörper können auch mehr als eine Nut vorgesehen sein. Der tragfähige Querschnitt des Grundkörpers wird durch die zumindest eine Nut nur bereichsweise reduziert, so dass trotz dieser partiellen Schwächung des Querschnitts des Grundkörpers eine hohe Tragfähigkeit des gesetzten Befestigungselementes gegeben ist.

Das im Untergrund erstellte Bohrloch wird beispielsweise mit einem Mörtel als aushärtbare Masse verfüllt und anschliessend das Befestigungselement drehend und/oder schlagend in das Bohrloch eingetrieben, wobei der verdrängte Anteil der aushärtbaren Masse leicht in der zumindest einen Nut aufsteigt. Dabei wird der Raum zwischen dem Befestigungselement und der Bohrlochwandung verfüllt und das Befestigungselement zusätzlich zu den in dem Untergrund eingedrungenen Abschnitten des Gewindes im Untergrund formschlüssig verankert. Aus dem Bohrloch im Bereich des Bohrlochmundes austretende Anteile der aushärtbaren Masse zeigen dem Anwender die vollständige Verfüllung der zumindest einen Nut an. Das Befestigungselement ist vor dem vollständigen Aushärten der aushärtbaren Masse bereits teilweise belastbar.

Das erfindungsgemässe Befestigungselement ist einfach und mit vergleichsweise geringem Kraftaufwand setzbar. Zudem kann das Befestigungselement auch ohne aushärtbare Masse im zuvor erstellten Bohrloch verankert werden, wobei der geringe Ringspalt zwischen der Mantelfläche des Grundkörpers und der Bohrlochwandung eine gute Verankerung des Befestigungselementes im Untergrund sicherstellt.

Die zumindest eine Nut wird beispielsweise während einem Walzvorgang oder in einem separaten Bearbeitungsvorgang, beispielsweise mittels spanender Bearbeitung an dem Grundkörper ausgebildet, was eine kostengünstige Fertigung des Befestigungselementes ermöglicht.

Vorzugsweise ist die zumindest eine Nut zumindest bereichsweise parallel zu dem Gewinde angeordnet. Die Nut verläuft im Wesentlichen wendelförmig in der gleichen Steigung des selbstfurchenden Gewindes, was ein leichtes Aufsteigen der aushärtbaren Masse in der zumindest einen Nut in Richtung des Bohrlochmundes ermöglicht.

Bevorzugt ist die zumindest eine Nut zumindest bereichsweise parallel zur Längsachse des Grundkörpers angeordnet, wodurch die verdrängte beziehungsweise eingebrachte aushärtbare Masse in der zumindest einen Nut leicht in Richtung des Bohrlochmundes gelangen kann.

In einer vorteilhaften Ausführungsform der Erfindung verläuft die zumindest eine Nut im Bereich des selbstfurchenden Gewindes wendelförmig und in den gewindefreien Bereichen parallel zur Längsachse des Grundkörpers, wodurch der verdrängte Anteil der aushärtbaren Masse einfach in der zumindest einen Nut aufsteigen kann.

Vorzugsweise weist die zumindest eine Nut im Querschnitt eine polygonale Ausgestaltung auf. Beispielsweise ist der Querschnitt der zumindest einen Nut trapezförmig oder rechteckig ausgebildet. Alternativ dazu kann die zumindest eine Nut im Querschnitt eine kreissegmentförmige Ausgestaltung aufweisen.

Bevorzugt entspricht die Tiefe der zumindest einen Nut dem 0.02- bis 0.5-fachen des Durchmessers des Grundkörpers, wodurch eine Vielzahl von aushärtbaren Massen verwendbar ist, die auch grössere Partikel von Füllstoffen aufweisen. Vorteilhaft beträgt die minimale Tiefe der zumindest einen Nut zumindest dem Betrag der 2-fachen Füllstoffpartikelgrösse, welche die hauptsächlich mit dem Befestigungselement zur Anwendung kommende aushärtbare Masse aufweist.

Vorzugsweise entspricht die zwischen den Gewindeflanken am Gewindegrund gemessene Breite der zumindest einen Nut dem 0.05- bis 0.5-fachen des Durchmessers des Grundkörpers, wodurch eine Vielzahl von aushärtbaren Massen verwendbar ist, die auch grössere Partikel von Füllstoffen aufweisen. Der Nutengrund der zumindest einen Nut weist vorteilhaft eine Erstreckung parallel zum Gewindegrund beziehungsweise zur Mantelfläche des Grundkörpers auf.

Die Tiefe und Breite der Nut sind vorteilhaft in Abhängigkeit der hauptsächlich zur Anwendung kommenden aushärtbaren Masse ausgebildet, wobei der tragfähige Querschnitt des Grundkörpers lediglich bereichsweise reduziert wird.

In einer vorteilhaften Ausführungsform der Erfindung ist der Grundkörper ein Schaft, an dessen Mantelfläche zumindest bereichsweise das selbstfurchende Gewinde vorgesehen ist. Anschliessend an das selbstfurchende Gewinde kann zur Schaffung einer Ankerstange ein weiteres Gewinde z. B. in Form eines Maschinengewindes für die Anordnung einer Mutter vorgesehen sein. Das selbstfurchende Gewinde ist beispielsweise ein Steilgewinde, so dass dieses Befestigungselement schlagend setzbar ist.

Vorzugsweise ist an einem Ende des Schafts ein Angriffsmittel für ein Setzwerkzeug z. B. in Form eines Schraubenkopfes vorgesehen, das ein schlagendes und/oder drehendes Setzen des Befestigungselementes in Form einer selbstfurchenden Schraube ermöglicht.

In einer weiteren vorteilhaften Ausführungsform der Erfindung weist der Grundkörper ein innenliegendes Angriffsmittel für ein Setzwerkzeug sowie z. B. eine mit einem Innengewinde als Lastangriffsmittel versehene, von einem Ende des Grundkörpers zugängliche Aufnahme auf. Dieses Befestigungselement bildet eine selbstfurchende Innengewindehülse aus. Das selbstfurchende Gewinde ist beispielsweise ein Steilgewinde, so dass dieses Befestigungselement schlagend setzbar ist.

Vorzugsweise ist eine Verfüllöffnung im Grundkörper vorgesehen, welche die Aufnahme mit einer Aussenseite des Grundkörpers zum Verfüllen eines Bohrlochs im Untergrund verbindet. Dadurch kann das Bohrloch und der Ringspalt zwischen der Mantelfläche des Grundkörpers und der Bohrlochwandung nachträglich nach dem Setzen des Befestigungselementes mit der aushärtbaren Masse verfüllt werden, wobei die aushärtbare Masse durch die Nut in Richtung des Bohrlochmundes steigen kann. Vorteilhaft erstreckt sich die Verfüllöffnung parallel zur Längsachse von dem Angriffsmittel zu dem vorderen, in Setzrichtung liegenden Endes des Grundkörpers.

Die Erfindung wird nachstehend anhand mehrerer Ausführungsbeispiele näher erläutert. Es zeigen:
- Fig.1 1: Eine Seitenansicht eines ersten Ausführungsbeispiels des erfindungsgemässen Befestigungselementes;
- Fig. 2: das in der Fig. 1 dargestellte Befestigungselement im gesetzten Zustand;
- Fig.3: eine Seitenansicht eines zweiten Ausführungsbeispiels des erfindungsgemässen Befestigungselementes; und
- Fig.4: eine Seitenansicht eines dritten Ausführungsbeispiels des erfindungsgemässen Befestigungselementes.

Grundsätzlich sind in den Figuren gleiche Teile mit den gleichen Bezugszeichen versehen.

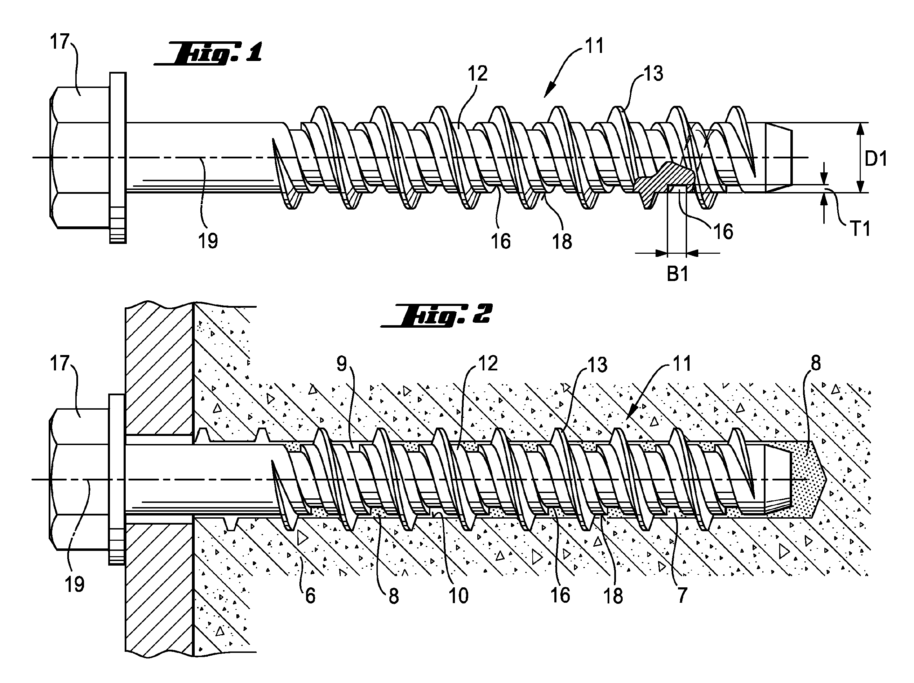

In den Figuren 1 und 2 ist als ein Befestigungselement 11 für harte Untergründe 6, wie Beton, Mauerwerk und dergleichen, eine Betonschraube dargestellt, das in ein zuvor erstelltes Bohrloch 7 in dem Untergrund 6 gesetzt wird. Das Befestigungselement 11 weist einen Schaft als Grundkörper 12, der sich entlang einer Längsachse 19 erstreckt und eine Mantelfläche 18 sowie einen Sechskantkopf 17 als Angriffsmittel für ein hier nicht dargestelltes Setzwerkzeug auf. Das Befestigungselement 11 ist schlagend und/oder drehend setzbar. An dem Grundkörper 12 ist bereichsweise ein selbstfurchendes Gewinde 13 vorgesehen, dessen Höhe sich von der Mantelfläche 18 des Grundkörpers 12 radial nach aussen erstreckt.

Zwischen und axial beabstandet zu dem Gewinde 13 ist am Grundkörper 12 eine parallel zu dem Gewinde 13 verlaufende Nut 16 für eine aushärtbare Masse 8 angeordnet. Die Nut 16 erstreckt sich mit einer Tiefe T1, die dem 0.1-fachen des Durchmessers D1 des Grundkörpers 12 entspricht, von der Mantelfläche 18 des Grundkörpers 12 radial nach innen am Schaft und weist einen polygonalen Querschnitt auf. Weiter weist die Nut 16 eine Breite B1 auf, die dem 0.3-fachen des Durchmessers D1 des Grundkörpers 12 entspricht.

Das Bohrloch 7 wird mit einer bestimmten Menge der aushärtbaren Masse 8, z. B. mit einem Zweikomponentenmörtel, befüllt und anschliessend das Befestigungselement 11 drehend in das Bohrloch 7 eingetrieben. Dabei furcht sich das selbstfurchende Gewinde 13 in die Bohrlochwandung 10 ein und die zuvor eingebrachte aushärtbare Masse 8 wird zum Teil verdrängt. Der verdrängte Anteil der aushärtbaren Masse 8 steigt dabei in der Nut 16 auf und füllt den Raum 9 zwischen dem Befestigungselement 11 und der Bohrlochwandung 10 aus. Das Befestigungselement 11 ist einerseits mit dem selbstfurchenden Gewinde 13 und andererseits mittels der ausgehärteten Masse 8 im Untergrund 6 verankert.

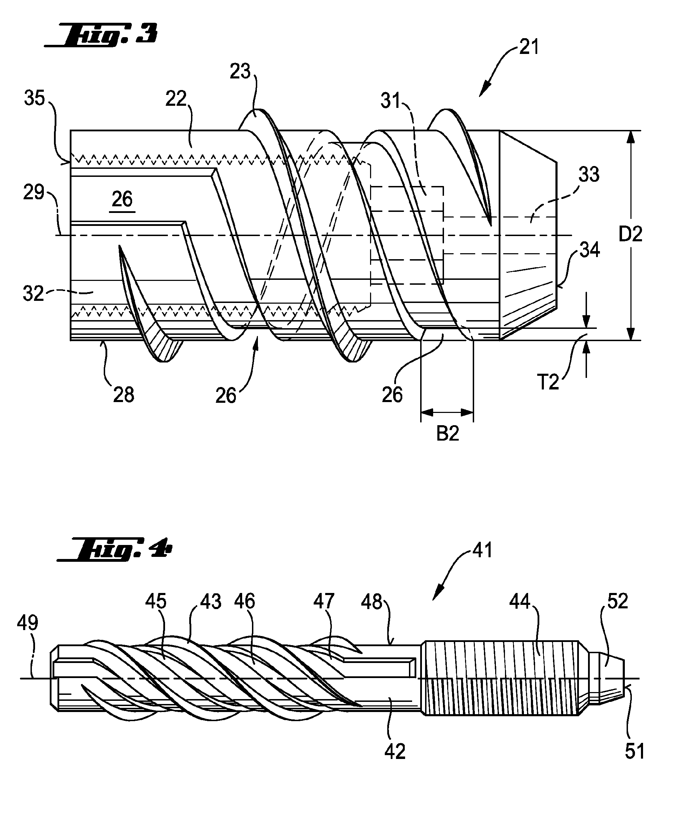

Das in der Figur 3 dargestellte Befestigungselement 21 für harte Untergründe in Form einer Innengewindehülse weist einen zylindrischen Grundkörper 22 auf, der sich entlang einer Längsachse 29 erstreckt und eine Mantelfläche 28 aufweist. An dem Grundkörper 22 ist bereichsweise ein selbstfurchendes Gewinde 23 vorgesehen, dessen Höhe sich von der Mantelfläche 28 des Grundkörpers 22 radial nach aussen erstreckt. Der Grundkörper 22 weist ein innenliegendes Angriffsmittel 31 sowie eine daran anschliessende, von einem Ende 35 des Grundkörpers 22 zugängliche Aufnahme 32 mit einem Innengewinde als Lastangriffsmittel für eine hier nicht dargestellte Gewindestange oder Schraube auf. Weiter ist eine Verfüllbohrung 33 vorgesehen, die sich von dem Angriffsmittel 31 bis zu einem vorderen Ende 34 des Grundkörpers 22 erstreckt.

Axial beabstandet zu dem Gewinde 23 ist am Grundkörper 22 eine Nut 26 vorgesehen, die im Bereich des Gewindes 23 wendelförmig sowie parallel zu dem Gewinde 23 und in einem gewindefreien Bereich des Grundkörpers 22 parallel zur Längsachse 29 des Grundkörpers 22 verlaufend angeordnet ist. Die Nut 26 erstreckt sich mit einer Tiefe T2, die dem 0.07-fachen des Durchmessers D2 des Grundkörpers 22 entspricht, von der Mantelfläche 28 des Grundkörpers 22 radial nach innen und weist einen leicht trapezförmigen Querschnitt auf. Weiter weist die Nut 26 eine Breite B2 auf, die dem 0.35-fachen des Durchmessers D2 des Grundkörpers 22 entspricht.

Das Befestigungselement 21 wird z. B. in ein Bohrloch drehend eingetrieben, wobei das selbstfurchende Gewinde 23 sich in die Bohrlochwandung furcht. Anschliessend wird die aushärtbare Masse durch die Verfüllöffnung 33 im Grundkörper 22 in den verbleibenden Raum im Bohrloch eingebracht, bis Teile der aushärtbaren Masse aus dem Bohrloch austreten. Die Nut 26 am Grundkörper 22 ermöglicht ein Aufsteigen der aushärtbaren Masse bei diesem Verfüllvorgang.

Das in der Figur 4 dargestellte Befestigungselement 41 für harte Untergründe in Form einer Ankerstange weist einen Schaft als Grundkörper 42 auf, der sich entlang einer Längsachse 49 erstreckt und eine Mantelfläche 48 aufweist. An dem Grundkörper 42 ist ein selbstfurchendes Gewinde 43, dessen Höhe sich von der Mantelfläche 48 des Grundkörpers 42 radial nach aussen erstreckt, sowie ein weiteres Gewinde 44 zum Festlegen eines Gegenstandes mittels einer hier nicht dargestellten Mutter vorgesehen. Das selbstfurchende Gewinde 43 ist als mehrgängiges Steilgewinde ausgebildet und ermöglicht ein schlagendes Setzen des Befestigungselementes 41. An einem Ende 51 des Grundkörpers 42 ist ein Angriffsmittel 52 für ein hier nicht dargestelltes Setzwerkzeug vorgesehen. An dem Grundkörper 42 sind im Bereich des selbstfurchenden Gewindes 43 Nuten 45, 46 und 47 vorgesehen, die zwischen und axial beabstandet zu dem Gewinde 43 wendelförmig und in den gewindefreien Bereichen parallel zur Längsachse 49 verlaufen. Die Tiefen der Nuten 46 und 47 erstrecken sich von der Mantelfläche 48 des Grundkörpers 42 radial nach innen.

## Patentansprüche

1. Befestigungselement für harte Untergründe (6) mit einem Grundkörper (12; 22; 42), der sich entlang einer Längsachse (19; 29; 49) erstreckt und eine Mantelfläche (18; 28; 48) aufweist, mit einem zumindest bereichsweise an dem Grundkörper (12; 22; 42) angeordneten, selbstfurchenden Gewinde (13; 23; 43), dessen Höhe sich von der Mantelfläche (18; 28; 48) des Grundkörpers (12; 22; 42) radial nach aussen erstreckt, und mit zumindest einer Nut (16; 26; 45, 46, 47) an dem Grundkörper (12; 22; 42), deren Tiefe (T1; T2) sich von der Mantelfläche (18; 28; 48) des Grundkörpers (12; 22; 42) radial nach innen erstreckt, **dadurch gekennzeichnet, dass**
die zumindest eine Nut (16; 26; 45, 46, 47) an dem Grundkörper (12; 22; 42) axial beabstandet zu dem Gewinde (13; 23; 43) angeordnet ist.

2. Befestigungselement nach Anspruch 1, **dadurch gekennzeichnet, dass** die zumindest eine Nut (16; 26; 45, 46, 47) zumindest bereichsweise parallel zu dem Gewinde (13; 23; 43) angeordnet ist.

3. Befestigungselement nach Anspruch 1 oder 2, **dadurch gekennzeichnet, dass** die zumindest eine Nut (26; 45, 46, 47) zumindest bereichsweise parallel zur Längsachse (29; 49) des Grundkörpers (22; 42) angeordnet ist.

4. Befestigungselement nach einem der Ansprüche 1 bis 3, **dadurch gekennzeichnet, dass** die zumindest eine Nut (16; 26; 45, 46, 47) im Querschnitt eine polygonale Ausgestaltung aufweist.

5. Befestigungselement nach einem der Ansprüche 1 bis 4, **dadurch gekennzeichnet, dass** die Tiefe (T1; T2) der zumindest einen Nut (16; 26) dem 0.02- bis 0.5-fachen des Durchmessers (D1; D2) des Grundkörpers (12; 22) entspricht.

6. Befestigungselement nach einem der Ansprüche 1 bis 5, **dadurch gekennzeichnet, dass** die Breite (B1; B2) der zumindest einen Nut (16; 26) dem 0.05- bis 0.5-fachen des Durchmessers (D1; D2) des Grundkörpers (12; 22) entspricht.

7. Befestigungselement nach einem der Ansprüche 1 bis 6, **dadurch gekennzeichnet, dass** der Grundkörper (12; 42) ein Schaft ist.

8. Befestigungselement nach Anspruch 7, **dadurch gekennzeichnet, dass** an einem Ende des Schafts ein Angriffsmittel (17; 52) für ein Setzwerkzeug vorgesehen ist.

9. Befestigungselement nach einem der Ansprüche 1 bis 6, **dadurch gekennzeichnet, dass** der Grundkörper (22) ein innenliegendes Angriffsmittel (31) für ein Setzwerkzeug sowie eine mit einem Lastangriffsmittel versehene, von einem Ende (35) des Grundkörpers (22) zugängliche Aufnahme (32) aufweist.

10. Befestigungselement nach Anspruch 9, **dadurch gekennzeichnet, dass** eine Verfüllöffnung (33) im Grundkörper (22) vorgesehen ist, welche die Aufnahme (32) mit einer Aussenseite des Grundkörpers (22) zum Verfüllen eines Bohrlochs (7) im Untergrund (6) verbindet.
